# EUROPEAN PATENT SPECIFICATION

(11) **EP 4 226 819 B1**
(45) Date of publication and mention of the grant of the patent: **15.10.2025**
(21) Application number: 22798509.0
(22) Date of filing: 11.02.2022
(51) Int. Cl.: A47J 31/46, A47J 31/60, A47J 31/00

(54) **BEVERAGE BREWING DEVICE, PIPELINE SYSTEM THEREOF AND WORKING METHOD THEREFOR**
GETRÄNKEBRÜHVORRICHTUNG, ROHRLEITUNGSSYSTEM DAFÜR UND ARBEITSVERFAHREN DAFÜR
DISPOSITIF D'INFUSION DE BOISSON, SYSTÈME DE CONDUITE ASSOCIÉ ET PROCÉDÉ DE FONCTIONNEMENT ASSOCIÉ

(30) Priority: 07.05.2021 CN 202110497400
(43) Date of publication of application: 16.08.2023
(73) Proprietor: Suzhou Industrial Park Kalerm Electric Appliances Co., Ltd, Suzhou, Jiangsu 215000 (CN)
(72) Inventor: WANG, Zhaoliang, Suzhou Industrial Park, Jiangsu 215000 (CN); ZHU, Meisheng, Suzhou Industrial Park, Jiangsu 215000 (CN)
(74) Representative: Murgitroyd & Company
(86) International application number: PCT/CN2022/076107
(87) International publication number: WO 2022/233167

(56) References cited:
- EP-A1- 2 589 322
- EP-A1- 3 192 406
- EP-B1- 1 450 655
- EP-B1- 3 192 406
- CN-A- 108 478 012
- CN-U- 204 561 834
- CN-U- 205 162 813
- CN-U- 210 871 092
- JP-A- H0 696 354
- US-B2- 9 107 538

## Description

### TECHNICAL FIELD

The present invention belongs to the field of beverage brewing device, and in particular, relates to a beverage brewing device, a pipeline system thereof, and a working method therefor.

### BACKGROUND

Obtaining a beverage with rich taste by brewing means has a long history in human history, which is not only a culture, but also a daily routine of social life. In the past, people mostly made tea or coffee by hand. Now with progress of mechanical automation and acceleration of life pace, applications of a beverage brewing device is becoming more and more popular, some are used in office places, and some are used at home. Meanwhile, a taste requirement of beverages made by the beverage brewing device is higher and higher, so that a technical improvement requirement in the field is also increasingly strong. The document of the present application is described by taking a coffee beverage as an example, and does not indicate that the present application abandons scope of protection of other beverages. Coffee beverages, such as espresso, cappuccino, milk coffee, white coffee, or perfumed flavored coffee, are very common and popular today, and may be obtained in many different ways, in particular, based on their original mixtures and methods of extraction beverages. In the prior art, a coffee machine for making a coffee beverage and a method for making a coffee beverage in a coffee machine have been widely known. In a common coffee machine, parameters such as temperature, pressure and the like are set by a host control unit, and hot water at a certain temperature is introduced into a brewing unit or a brewing container containing ground coffee at a certain pressure, after brewing, coffee is introduced into a container through a pipeline for drinking.

In the prior art, after coffee is made, a remaining liquid such as coffee exists in a pipeline from the brewing unit to a coffee outlet. When a coffee is made the next time, the remaining liquid will flow into a cup before the coffee is made the next time, thereby affecting quality of the coffee and further affecting taste and user experience of the coffee. In addition, in some cases, for example, after the coffee machine is cleaned, liquid used for cleaning, such as water, also remains in a brewing unit or a pipeline, and when coffee is made the next time, the cleaning liquid remained may enter a beverage container, which also affects the quality of the coffee and reduces concentration and temperature of the beverage, thereby affecting the taste of the beverage. Such a beverage device according to the prior art is disclosed in US9107538.

Patent application document No. EP3192406B1 discloses a device with a fluid transport system that uses a pressure piston system as the drive pressure for moving a pressure piston, which can actuate a residual fluid suction unit for sucking off residual fluid. The pressure piston system is set up to control the residual fluid suction unit with the aid of the movement of the pressure piston. The invention aims to improve the ease of use and automation of the hot beverage preparation device without the need for additional external energy sources or connections.

Therefore, it is necessary to study and design and provide a pipeline system that can be applied to a beverage brewing device for pipeline emptying or liquid drainage.

### SUMMARY

In view of above-mentioned deficiencies of the prior art, the present invention aims to: provide a pipeline system of a beverage brewing device which is configured to control fluid on-off of the pipeline to discharge residual beverage or liquid in the pipeline when a pipeline needs to be emptied or liquid needs to be discharged after a beverage is made or after cleaning, so as to avoid the taste and quality of a beverage from being affected due to the residual beverage or liquid entering a beverage container the next time a beverage is made.

To achieve the purpose mentioned above, the present invention provides technical solutions as follows:
a pipeline system of a beverage brewing device, comprising: a host control unit, a brewing unit, a first fluid pipeline, wherein one end of the first fluid pipeline is connected to the brewing unit and configured to output a beverage from the brewing unit to a beverage outlet, the pipeline system of the beverage brewing device further comprising: a control component and a second fluid pipeline, wherein one end of the second fluid pipeline is connected to the first fluid pipeline at a connection point which is located between the brewing unit and the beverage outlet; and the control component is mounted on a pipeline and configured to control on-off of the first fluid pipeline and the second fluid pipeline , wherein the control component is a drainage pump, and the drainage pump is controlled by the host control unit; an input end and an output end of the drainage pump are both connected to the second fluid pipeline, and the output end of the drainage pump is connected to a part of the second fluid pipeline with an outlet; when the drainage pump is switched on, a suction force is generated on a fluid in the first fluid pipeline and the brewing unit to control the liquid in the first fluid pipeline and the second fluid pipeline to flow towards a collection container; when a beverage needs to be output, the drainage pump is switched off, so that a first pathway formed from the brewing unit to the beverage outlet is unobstructed; when a residual beverage in the second part of the first fluid pipeline needs to be drained, the drainage pump is switched on, so that a third pathway formed from the beverage outlet to the collection container is unobstructed; and when a cleaning liquid in the brewing unit needs to be discharged, the drainage pump is switched on, so that a second pathway formed from the brewing unit to the collection container is unobstructed; where the control component empties a second part of the first fluid pipeline (1) through the second fluid pipeline.

By a connection of the second fluid pipeline, and a change of a flow direction of a second part of the second fluid pipeline caused by controlling the on-off of the first fluid pipeline and the second fluid pipeline, multiple groups of fluid pathways, from the brewing unit to the first fluid pipeline, from the brewing unit to the second fluid pipeline, from the beverage outlet to the second fluid pipeline, and from the second fluid pipeline to the beverage outlet, are formed in the pipeline system, and the on-off of the multiple groups of fluid pathways mentioned above is controlled by the control component, thereby controlling a flow direction of liquid in a pipeline and playing the role of emptying a pipeline or discharging liquid.

The control component empties a second part of the first fluid pipeline through the second fluid pipeline. At this time, the control component makes a fluid pathway, from the beverage outlet to the second fluid pipeline, unobstructed, and position of an outlet end of the second fluid pipeline lower than position of the beverage outlet, so that liquid in a pipeline may be discharged from the second fluid pipeline by means of gravity factor. The drainage pump makes the second fluid pipeline unobstructed, when liquid in a first part of the first fluid pipeline or liquid in a brewing unit and in the first part of the first fluid pipeline are to be discharged, to discharge the liquid mentioned above.

The control component empties a second part of the first fluid pipeline through the first fluid pipeline. At this time, the drainage pump makes a fluid pathway from the beverage outlet to the first fluid pipeline unobstructed, the second fluid pipeline is connected to an upper end of the first fluid pipeline, and the position of an outlet end faces upward or the outlet end is higher than the beverage outlet, so that the liquid in the pipeline may be discharged from the first fluid pipeline by means of gravity factor.

When liquid in a first part of the first fluid pipeline or liquid in the brewing unit and the first part of the first fluid pipeline is to be discharged, the control component makes the second fluid pipeline be on to discharge the liquid.

The brewing unit and a first part of the first fluid pipeline are communicated with external atmospheric pressure, and the control component is controlled to make the first fluid pipeline or the second fluid pipeline unobstructed, thereby making the liquid in the first part of the first fluid pipeline discharge under gravity.

In the prior art, the brewing unit is connected with a liquid inlet pipeline or a gas pipeline directly or indirectly communicated with outside world. In the present application, the liquid inlet pipeline is defined as a third fluid pipeline. Duo to the fact that some residues such as coffee powder or liquid drops such as coffee are often attached to an inner wall of a brewing unit in a brewing process, and a first part of a first fluid pipeline also has residual liquid; both of the residues or liquid drops in the brewing unit and residual liquid in the first part of the first fluid pipeline may affect quality of subsequent beverages. A cleaning liquid is introduced into the brewing unit through the third fluid pipeline for cleaning the brewing unit and the first fluid pipeline. The cleaning liquid is preferably clean water. By inputting the cleaning liquid through the third fluid pipeline, the residual liquid in the first part of the first fluid pipeline, and the cleaning liquid in the brewing unit and the first part of the first fluid pipeline are discharged through the first fluid pipeline or the second fluid pipeline, under control of the control component. The cleaning liquid may also be input through the third fluid pipeline to clean the brewing unit and all or part of the first fluid pipeline, and the cleaning liquid in the second part of the first fluid pipeline is discharged through the first fluid pipeline or the second fluid pipeline, under the control of the control component. The brewing unit and the first part of the first fluid pipeline may also be communicated with external atmospheric pressure through a gas pipeline of the brewing unit, so that the liquid in the first part of the first fluid pipeline is discharged through the first fluid pipeline or the second fluid pipeline under the control of the control component. In the present application, the third liquid pipeline for inputting the cleaning liquid to the brewing unit and the gas pipeline utilize a liquid inlet fluid pipeline and a gas pipeline in the prior art, it is beneficial to simplifying the structure. In practice, the pipeline may also be connected additionally.

Optionally, a control component may be any of the following.

The control component is a drainage pump and the drainage pump is disposed on the second fluid pipeline. After a beverage is made, the drainage pump is switched on to generate suction force, and residual beverage in a first fluid pipeline enters a second fluid pipeline from a beverage outlet under the suction force and is discharged into a collection container; during a cleaning process of the brewing unit, switch on the drainage pump, pump the cleaning fluid into the second fluid pipeline and discharge the cleaning fluid into the collection container; through the gas pipeline, the brewing unit and the first part of the first fluid pipeline is communicated with external atmospheric pressure, so that the liquid in the first part of the first fluid pipeline is discharged through the second fluid pipeline.

The control component comprises two-way valves, the two-way valves comprise a first solenoid valve and a second solenoid valve, the first solenoid valve is mounted on a second part of a first fluid pipeline, and the second solenoid valve is mounted on a second fluid pipeline. During making of a beverage, the first solenoid valve is switched on, the second solenoid valve is switched off, and the beverage flows into a beverage container through the first fluid pipeline. After the beverage is made, the second solenoid valve is switched on, air is introduced into the pipeline, and residual beverage in a second part of the first fluid pipeline is discharged through the first fluid pipeline or the second fluid pipeline.

The control component is a three-way valve, and the three-way valve is mounted at a connection point of a first fluid pipeline and a second fluid pipeline. A flow direction is adjusted by controlling on-off of three valve ports in the three-way valve. For instance, the three-way valve is a two-position three-way normally open solenoid valve, and a normally open port is connected to a part of the first fluid pipeline with an outlet. During making of a beverage, a valve port connected with the second fluid pipeline is closed, and the beverage in a brewing unit flows into a beverage container through the first fluid pipeline. After the beverage is made, switch the three-way valve, a valve port connected with the brewing unit is closed, the valve port connected with the second fluid pipeline is opened, air is introduced into the pipeline, and residual beverage in a second part of the first fluid pipeline is discharged through the first fluid pipeline or the second fluid pipeline.

A beverage brewing device, comprising any of the pipeline system of the beverage brewing device mentioned above.

A working method for a pipeline system of the above-mentioned beverage brewing device comprises the following steps:
S1: selecting a working mode of the pipeline system according to an instruction of the beverage brewing device;
S2: starting, by the host control unit, the corresponding working mode according to the selection;
S3: switching on-off of a first fluid pipeline and a second fluid pipeline by the control component of the pipeline system according to the working mode selected, to empty all or part of a pipeline through the second fluid pipeline, where the working mode comprises a first mode, a second mode and a third mode, where the control component is controlled by the host control unit; where the third mode comprises a step S3c, a step S3a and a step S3b, the step S3a comprises: switching the control component to make a pathway from the beverage outlet to the second fluid pipeline unobstructed to drain the liquid in a second part of the first fluid pipeline with air being introduced, and the liquid in the second part of the first fluid pipeline is drained through the first fluid pipeline or the second fluid pipeline; the step S3b comprises: making a first part of the first fluid pipeline be communicated with an external atmospheric pressure, and switching the control component to make one of the first fluid pipeline or the second fluid pipeline unobstructed, so that liquid in the first part of the first fluid pipeline is discharged through the first fluid pipeline or the second fluid pipeline, and the step S3c comprises: switching the control component to make one of the first fluid pipeline and the second fluid pipeline unobstructed, inputting a cleaning liquid into the brewing unit, and discharging the cleaning liquid selectively through the first fluid pipeline or the second fluid pipeline, to clean the brewing unit and all or part of the first fluid pipeline;
S4: performing, by the control component, automatic reset after a set time or next start of the beverage brewing device.

The second mode is configured to drain liquid in all of the first fluid pipeline.

The first mode comprises step S3a: switching the control component to make a pathway from a beverage outlet to the second fluid pipeline unobstructed to drain the liquid in the second part of the first fluid pipeline. At this time, air is introduced into the pipeline, and the liquid in the second part of the first fluid pipeline is drained through the first fluid pipeline or the second fluid pipeline.

The second mode comprises S3a + step S3b. wherein Step S3b comprises: making a first part of the first fluid pipeline be communicated with the external atmospheric pressure, and switching the control component to make one of the first fluid pipeline or the second fluid pipeline unobstructed, so that liquid in the first part of the first fluid pipeline is discharged through the first fluid pipeline or the second fluid pipeline.

The third mode comprises step S3c + step S3a + step S3b, wherein Step S3c comprises: switching the control component to make one of the first fluid pipeline and the second fluid pipeline unobstructed, inputting a cleaning liquid into the brewing unit, and discharging the cleaning liquid through the first fluid pipeline or the second fluid pipeline, to clean the brewing unit and all or part of the first fluid pipeline.

The step S3c is performed before the step S3a.

Select the first mode when only the second part of the first pipeline needs to be emptied, select the second mode when the residual liquid in all of the first fluid pipeline needs to be drained, select the third mode when the beverage brewing device pipeline needs to be cleaned and a cleaning liquid in the pipeline needs to be discharged.

Compared with the prior art, the present invention has following beneficial effects.

According to the pipeline system of the beverage brewing device provided by the present invention, a second fluid pipeline is connected to a first fluid pipeline, on-off of the first fluid pipeline and the second fluid pipeline is controlled by a control component, residual beverage in the first fluid pipeline is drained after a beverage is made, to avoid the taste and quality of the beverage from being affected due to the residual beverage entering a beverage container the next time a beverage is made, thereby ensuring stability and consistency of the taste of the beverage.

Further, according to the pipeline system of the beverage brewing device provided by the present invention, combining the control component with the brewing unit and a third fluid pipeline facilitates cleaning of the beverage brewing device and discharging of a cleaning liquid in the brewing unit and the first fluid pipeline after cleaning, preventing water from remaining in the pipeline for a long time, maintaining cleanness and drying of the pipeline, and preventing the cleaning liquid in the first fluid pipeline from entering the beverage container when making a beverage next time, reducing concentration of the beverage, and affecting the taste and quality of the beverage.

### BRIEF DESCRIPTION OF THE DRAWINGS

In order to describe the technical solutions in the embodiments of the present invention more clearly, a brief introduction on the drawings needed in the description of the embodiments is given below. Obviously, the drawings in the description below are only some embodiments of the present invention, based on which other drawings may also be obtained by those of ordinary skill in the art without any inventive efforts.
FIG. 1 is a schematic structural diagram according to a first embodiment of the present invention.
FIG. 2 is a schematic structural diagram according to a second embodiment of the present invention.
FIG. 3 is a schematic structural diagram according to a third embodiment of the present invention.
FIG. 4 is a schematic structural diagram according to a fourth embodiment of the present invention.
FIG. 5 is a schematic structural diagram according to a fifth embodiment of the present invention.
FIG. 6 is a schematic structural diagram of a three-way valve according to the fourth embodiment and the fifth embodiment of the present invention.
FIG. 7 is a schematic structural diagram of a second fluid pipeline directly connected with a collection container according to the present invention.
FIG. 8 is a schematic diagram of a connection structure in a coffee machine according to the present invention.

Reference: 1: first fluid pipeline; 10: beverage outlet; 11: first solenoid valve; 12: three-way valve; 121: first valve port; 122: second valve port; 123: third valve port; 2: second fluid pipeline; 20: fixator; 21: drainage pump; 22: second solenoid valve; 3: brewing unit; 4: third fluid pipeline; 5: valve; 6: beverage container; 7: collection container; a: connection point of first fluid pipeline and second fluid pipeline.

### DETAILED DESCRIPTIONS OF THE EMBODIMENTS

The technical solution in the present invention will be described clearly and completely below by using an example in which the beverage brewing is a coffee machine. Obviously, the described embodiments are part of the embodiments of the present invention, not all of them. Based on the embodiments in the present invention, all other embodiments obtained by those skilled in the art without doing creative work fall in the scope of protection in the present invention.

For ease of description, a pipeline not clearly indicated in the following description is a general term of a brewing unit, a first fluid pipeline, and a second fluid pipeline. A part of the first fluid pipeline between an outlet of a brewing unit and a connection point of a first fluid pipeline and a second fluid pipeline is defined as a first part. A part of the first fluid pipeline between a beverage outlet and the connection point of the first fluid pipeline and the second fluid pipeline is defined as a second part. A process of discharging liquid in a pipeline and filling the pipeline space with air defined as emptying. A process of discharging an existing liquid in a pipeline and filling the pipeline space with a new liquid is defined as discharging. In the process of emptying or discharging, due to a capillary phenomenon, it is inevitable that some liquid attached to the pipeline wall may not be discharged, and therefore the description of emptying and discharging does not mean complete and absolute emptying and discharging.

A first embodiment is shown as follows.

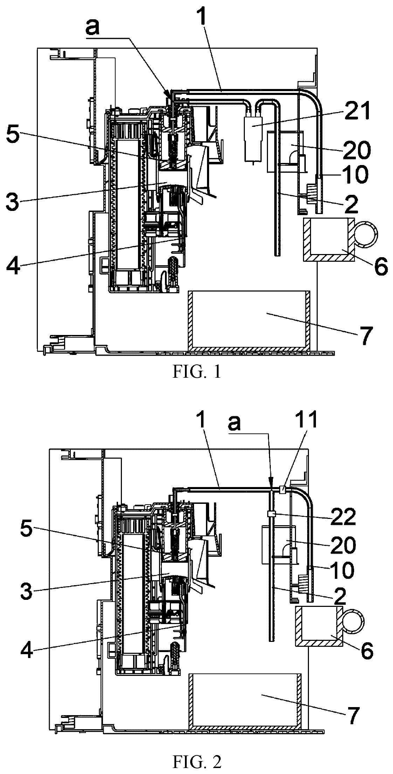

A pipeline system of a coffee machine, shown in FIG. 1, comprises a host control unit (not shown), a brewing unit 3, a first fluid pipeline 1, a control component, and a second fluid pipeline 2. One end of the first fluid pipeline 1 is connected to the brewing unit 3 and configured to output a coffee from the brewing unit 3 to a beverage outlet 10. One end of the second fluid pipeline 2 is connected to the first fluid pipeline 1, and the connection point a is located between the brewing unit 3 and the beverage outlet 10, and a collection container 7 is disposed under the other end of the second fluid pipeline 2 for the discharging of residual coffee and cleaning liquid when empty the pipeline or discharge liquid. An outlet end of the first fluid pipeline 1 is provided with a beverage container 6. The second fluid pipeline 2 is clamped in the coffee machine by means of a fixator 20. The control component is a drainage pump 21, and the drainage pump 21 is controlled by the host control unit. An input end and an output end of the drainage pump 21 are both connected to the second fluid pipeline 2, wherein the output end is connected to a part of the second fluid pipeline 2 with an outlet. In the embodiment, a pathway from the brewing unit 3 to the beverage outlet 10 is defined as a first pathway, a pathway from the brewing unit 3 to the collection container 7 is defined as a second pathway, and a pathway from the beverage outlet 10 to the collection container 7 is defined as a third pathway. The drainage pump 21 is controlled by the host control unit, and when the drainage pump 21 is switched on, a suction force is generated on a fluid in the first fluid pipeline 1 and the brewing unit 3 to control the liquid in the first fluid pipeline 1 and the second fluid pipeline 2 to flow towards the collection container 7. When a coffee needs to be output, the drainage pump 21 is switched off, so that the first pathway is unobstructed; when residual coffee in the second part of the first fluid pipeline 1 needs to be drained, the drainage pump 21 is switched on, so that the third pathway is unobstructed; and when other liquids such as a cleaning liquid in the brewing unit 3 need to be discharged, the drainage pump 21 is switched on, so that the second pathway is unobstructed.

The brewing unit 3 is connected with a third fluid pipeline 4, and the brewing unit 3 is communicated with the first fluid pipeline 1 and the second fluid pipeline 2 through a valve 5. When a coffee is brewed, the drainage pump 21 is switched off, and the brewed coffee enters the beverage container 6 through the first fluid pipeline 1. At this time, there is still residual coffee in the first fluid pipeline 1. When residual coffee in the first fluid pipeline 1 needs to be drained, the drainage pump 21 is switched on by the host control unit, and residual coffee in the first fluid pipeline 1 is driven by the drainage pump 21 to flow into the second fluid pipeline 2 and is discharged into the collection container 7. When the brewing unit 3 needs to be cleaned, the drainage pump 21 is switched on, a cleaning liquid is input into the brewing unit 3 through the third fluid pipeline 4, and the cleaning liquid is discharged into the collection container 7 by the second fluid pipeline 2. When liquid in a first part of the first fluid pipeline 1 needs to be discharged, the drainage pump 21 is switched on, and the first part of the first fluid pipeline 1 is communicated with external atmospheric pressure through a gas pipeline, so that the liquid in the first part of the first fluid pipeline 1 is discharged into the collection container 7 through the second fluid pipeline 2.

A working method for the above-mentioned pipeline system of the coffee machine comprises following steps:
S1: selecting a working mode of the pipeline system according to an instruction of a coffee machine;
S2: starting, by the host control unit, the corresponding working mode according to the selection;
S3: switching on-off of a first fluid pipeline 1 and a second fluid pipeline 2 by the drainage pump 21 according to the working mode selected, to empty all or part of the pipelines or discharge liquid; and
S4: performing, by the drainage pump 21, automatic reset after a set time or next start of the beverage brewing device.

The working mode mentioned above comprises a first mode, a second mode, and a third mode.

The first mode is configured to drain liquid in a second part of a first fluid pipeline 1; the second mode is configured to drain liquid in all of the first fluid pipeline 1; and the third mode is configured to discharge a cleaning liquid when the brewing unit 3 and the first part of the first fluid pipeline 1 are cleaned, and to empty the first fluid pipeline 1 after cleaning.

Select the first mode when only the second part of the first pipeline 1 needs to be emptied. Step of the first mode is step S3a: switching on the drainage pump 21 to make a pathway from the beverage outlet 10 to the second fluid pipeline 2 unobstructed, so that residual coffee or liquid is discharged into the collection container 7 under the drive of the pump drainage 21.

Select the second mode when the residual coffee in all of the first fluid pipeline 1 needs to be drained. Steps of the second mode are step S3a + step S3b, wherein the step S3b comprises: making the first part of the first fluid pipeline 1 be communicated with external atmospheric pressure, and switching on the pump drainage 21 to make liquid in the first part of the first fluid pipeline 1 flow into the collection container 7 through the second fluid pipeline 2.

Select the third mode when the coffee machine pipeline needs to be cleaned and a cleaning liquid in the pipeline needs to be discharged, steps of the third mode are step S3c + step S3a + step S3b, wherein the step S3c comprises: switching on the pump drainage 21 to make the second fluid pipeline 2 unobstructed, inputting the cleaning liquid into the brewing unit 3 through a third fluid pipeline 4, and discharging the cleaning liquid through the second fluid pipeline 2, thereby cleaning the brewing unit 3 and the first part of the first fluid pipeline 1.

A second embodiment is shown as follows.

Different from the first embodiment, in a coffee pipeline system as shown in FIG. 2, the control component comprises two-way valves, the two-way valves are controlled to be switched on or off by a host control unit. The two-way valves include a first solenoid valve 11 and a second solenoid valve 22, the first solenoid valve 11 is mounted on a second part of a first fluid pipeline 1, and the second solenoid valve 22 is mounted on a second fluid pipeline 2. The position of an outlet end of the second fluid pipeline 2 is lower than the position of a beverage outlet 10, so that liquid in the pipeline may automatically flow out from an outlet end of the second fluid pipeline 2 located at one end of a collection container 7 by means of gravity factor, and preferably the second fluid pipeline 2 is located below the first fluid pipeline 1, thereby facilitating air pressure flow and pipelines layout. In the embodiment, a pathway from a brewing unit 3 to the beverage outlet 10 is defined as a first pathway, a pathway from the brewing unit 3 to the collection container 7 is defined as a second pathway, and a pathway from the beverage outlet 10 to the collection container 7 is defined as a third pathway. The first solenoid valve 11 and the second solenoid valve 22 are controlled by the host control unit, so as to control the liquid on-off of the first fluid pipeline 1 and the second fluid pipeline 2. When a coffee needs to be output, the first solenoid valve 11 is switched on, and the second solenoid valve 22 is switched off, so that the first pathway is unobstructed; when liquid in a second part of the first fluid pipeline 1 needs to be drained, the first solenoid valve 11 and the second solenoid valve 22 are both switched on, so that the third pathway is unobstructed; when other liquid such as a cleaning liquid in the brewing unit 3 and the first part of the first fluid pipeline 1 needs to be discharged, the first solenoid valve 11 is switched off, and the second solenoid valve 22 is switched on, so that the second pathway is unobstructed.

When a coffee is brewed, the first solenoid valve 11 is switched on, the second solenoid valve 22 is switched off, and the brewed coffee enters a beverage container 6 through the first fluid pipeline 1. At this time, there is still residual coffee in the first fluid pipeline 1. When residual coffee in the second part of the first fluid pipeline 1 needs to be drained, the second solenoid valve 22 is switched on by the host control unit, air is introduced into the pipeline, original liquid filling with the second fluid pipeline 2 is discharged under gravity, and a residual coffee is then discharged into the collection container 7. When the brewing unit 3 needs to be cleaned, the first solenoid valve 11 is switched off, the second solenoid valve 22 is switched on, a cleaning liquid is input into the brewing unit 3 through a third fluid pipeline 4, and the cleaning liquid is discharged into the collection container 7 through the second fluid pipeline 2. When liquid in the first part of the first fluid pipeline 1 needs to be drained, the first part of the first fluid pipeline 1 is communicated with external atmospheric pressure, so that the liquid in the first part of the first fluid pipeline 1 is discharged into the collection container 7 through the second fluid pipeline 2.

A working method for the above-mentioned pipeline system of the coffee machine comprises following steps:
S1: selecting a working mode of the pipeline system according to an instruction of a coffee machine;
S2: starting, by the host control unit, the working mode according to selection;
S3: switching on-off of the first fluid pipeline 1 and the second fluid pipeline 2 by the first solenoid valve 11 and the second solenoid valve 22 according to the working mode selected, to empty all or part of the pipelines or discharge liquid; and
S4: performing, by the first solenoid valve 11 and the second solenoid valve 22, automatic reset after a set time or next start of the beverage brewing device.

The working mode mentioned above comprises a first mode, a second mode, and a third mode.

The first mode is configured to drain liquid in a second part of the first fluid pipeline 1; the second mode is configured to drain liquid in all of the first fluid pipeline 1; and the third mode is configured to discharge a cleaning liquid when the brewing unit 3 and the first part of the first fluid pipeline 1 are cleaned, and to empty the first fluid pipeline 1 after cleaning.

Select the first mode when only the second part of the first pipeline 1 needs to be emptied. Step of the first mode is step S3a: switching on the first solenoid valve 11 and the second solenoid valve 22 to make a pathway from a beverage outlet 10 to the second fluid pipeline 2 unobstructed, and is communicated with external atmospheric pressure, then residual coffee is discharged into the collection container 7.

Select the second mode when the residual coffee in all of the first fluid pipeline 1 needs to be drained. Steps of the second mode are step S3a + step S3b, wherein the step S3b comprises: making the first part of the first fluid pipeline 1 be communicated with external atmospheric pressure through a gas pipeline, switching on the second solenoid valve 22, and switching off the first solenoid valve 11, so that liquid in the first part of the first fluid pipeline 1 flows into the collection container 7 through the second fluid pipeline 2.

Select the third mode when the coffee machine pipeline needs to be cleaned and a cleaning liquid in the pipeline needs to be discharged, steps of the third mode are step S3c + step S3a + step S3b, wherein the step S3c comprises: switching off the first solenoid valve 11, switching on the second solenoid valve 22, so as to make the second fluid pipeline 2 unobstructed, inputting the cleaning liquid into the brewing unit 3, and discharging the cleaning liquid through the second fluid pipeline 2, thereby cleaning the brewing unit 3 and the first part of the first fluid pipeline 1.

A third embodiment is shown as follows.

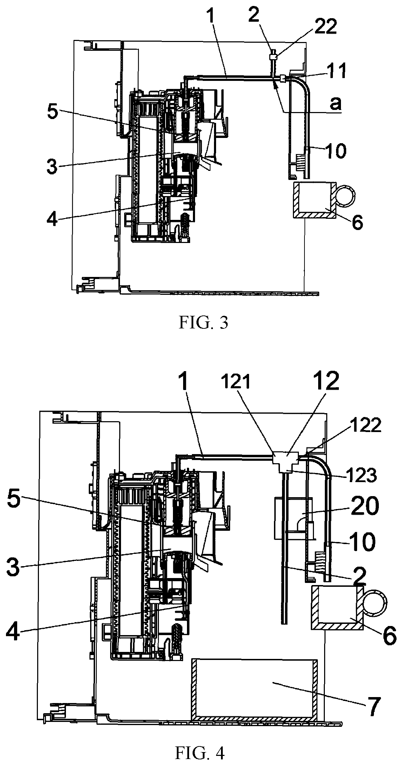

Different from the second embodiment, in a coffee pipeline system as shown in FIG. 3, an outlet end of the second fluid pipeline 2 faces upward, a beverage container 6 or a collection container 7 is disposed below a beverage outlet 10 as required, and all the first fluid pipeline 1 may be cleaned during cleaning.

When a coffee is brewed, the beverage container 6 is disposed below the beverage outlet 10, the first solenoid valve 11 is switched on, the second solenoid valve 22 is switched off, and the brewed coffee enters the beverage container 6 through the first fluid pipeline 1. At this time, there is still residual coffee in the first fluid pipeline 1. When residual coffee in the second part of the first fluid pipeline 1 needs to be drained, the second solenoid valve 22 is switched on by the host control unit, air is introduced into the pipeline, the residual coffee continues to be discharged into the beverage container 6 under gravity. When the brewing unit 3 needs to be cleaned, the collection container 7 is disposed below the beverage outlet 10, the first solenoid valve 11 is switched on, the second solenoid valve 22 is switched off, a cleaning liquid is input into the brewing unit 3 through a third fluid pipeline 4, and the cleaning liquid is discharged into the collection container 7 through the first fluid pipeline 1. When liquid in the first part of the first fluid pipeline 1 needs to be drained, making the first part of the first fluid pipeline 1 be communicated with external atmospheric pressure, so that the liquid in the first part of the first fluid pipeline 1 is discharged into the collection container 7 through the second fluid pipeline 1.

A difference, between the working method of the above-mentioned pipeline system of the coffee machine and the working method of the pipeline system in the second embodiment, is that when a discharged liquid is a coffee, the beverage container 6 is disposed below the beverage outlet 10, and when the discharged liquid is a cleaning liquid, the collection container 7 is disposed below the beverage outlet 10.

In a further embodiment, the first solenoid valve 11 mentioned above may be omitted, and only the second solenoid valve 22 may be controlled to achieve the purpose of use.

A fourth embodiment is shown as follows.

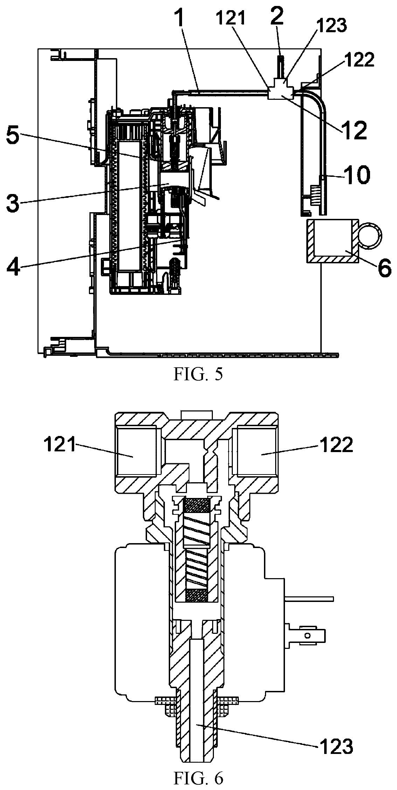

Different from the second embodiment, in a coffee pipeline system as shown in FIG. 4 and FIG. 6, the control component is a three-way valve 12. One end of a second fluid pipeline 2 is connected to a first fluid pipeline 1 through the three-way valve 12, and a collection container 7 is disposed below the other outlet end of the second fluid pipeline 2. The three-way valve 12 is located between a brewing unit 3 and a beverage outlet 10. The three-way valve 12 is controlled to be powered on or powered off by a host control unit. The three-way valve 12 is a two-position three-way normally open solenoid valve, valve ports of the three-way valve 12 is respectively a first valve port 121, a second valve port 122, and a third valve port 123, wherein the second valve port 122 is a normally open port. The second valve port 122 is connected to a second part of the first fluid pipeline 1, the first valve port 121 is connected to one end of the brewing unit 3, the third valve port 123 is connected to the second fluid pipeline 2, and position of an outlet end of the second fluid pipeline 2 is lower than position of the beverage outlet 10, so that liquid in the pipeline may automatically flow out from an outlet end of the second fluid pipeline 2 located at the collection container 7 by means of gravity factor, and preferably the second fluid pipeline 2 is located below the first fluid pipeline 1, thereby facilitating air pressure flow and pipelines layout. In the embodiment, a pathway from the brewing unit 3 to the beverage outlet 10 is defined as a first pathway, and a pathway from the beverage outlet 10 to the collection container 7 is defined as a second pathway. The three-way valve 12 is controlled by the host control unit, so as to control the liquid on-off of the first fluid pipeline 1 and the second fluid pipeline 2. When a coffee or other liquids in the brewing unit 3 needs to be output, the three-way valve 12 is powered on, so that the first pathway mentioned above is unobstructed; and when liquid in the second part of the first fluid pipeline 1 needs to be drained, the three-way valve 12 is powered off, so that the second pathway mentioned above is unobstructed.

When a coffee is brewed, a beverage container 6 is placed below the beverage outlet 10, the three-way valve 12 is powered on, a valve core goes down, the third valve port 123 is closed, and the brewed coffee enters the beverage container 6 through the first fluid pipeline 1. At this time, there is still residual coffee in the first fluid pipeline 1. When residual coffee needs to be drained, the three-way valve 12 is powered off, the valve core goes up, the first valve port 121 is closed, and the residual coffee in the second part of the first fluid pipeline 1 flows into the collection container 7 through the second fluid pipeline 2. When the brewing unit 3 needs to be cleaned, a collection container is placed below the beverage outlet 10, the three-way valve 12 is powered on, and a cleaning liquid is discharged into the collection container 7 through the first fluid pipeline 1; and the first part of the first fluid pipeline 1 is communicated with external atmospheric pressure through a gas pipeline, the cleaning liquid in the first fluid pipeline 1 continues to be discharged, the three-way valve 12 is powered off, residual cleaning liquid in the first fluid pipeline 1 is discharged into the collection container 7 through the second fluid pipeline 2.

A working method for the above-mentioned pipeline system of the coffee machine comprises following steps:
S1: selecting a working mode of the pipeline system according to an instruction of a coffee machine;
S2: starting, by the host control unit, the working mode according to selection;
S3: switching on-off of the first fluid pipeline 1 and the second fluid pipeline 2 by the three-way valve 12 according to the working mode selected, to empty all or part of the pipelines or discharge liquid; and
S4: performing, by the three-way valve 12, automatic reset after a set time or next start of the beverage brewing device.

The working mode mentioned above comprises a first mode, a second mode, and a third mode.

The first mode is configured to drain liquid in a second part of the first fluid pipeline 1; the second mode is configured to drain liquid in all of the first fluid pipeline 1; and the third mode is configured to discharge a cleaning liquid when the brewing unit 3 and the first part of the first fluid pipeline 1 are cleaned, and to empty the first fluid pipeline 1 after cleaning.

Select the first mode when only the second part of the first pipeline 1 needs to be emptied. Step of the first mode is step S3a: Powering off the three-way valve 12, so that a pathway of a beverage outlet 10 to the second fluid pipeline 2 is unobstructed, and is communicated with external atmospheric pressure, then residual coffee is discharged into a collection container 7 through the second fluid pipeline 2.

Select the second mode when the residual coffee in all of the first fluid pipeline 1 needs to be drained. Steps of the second mode are step S3a + step S3b, wherein the step S3b comprises: making the first part of the first fluid pipeline 1 be communicated with external atmospheric pressure, powering on the three-way valve 12, so that liquid in the first part of the first fluid pipeline 1 flows into the collection container 7, below the beverage outlet 10, through the first fluid pipeline 1.

Select the third mode when the coffee machine pipeline needs to be cleaned and a cleaning liquid in the pipeline needs to be discharged, steps of the third mode are step S3c + step S3a + step S3b, wherein the step S3c comprises: powering on the three-way valve 12, inputting the cleaning liquid into the brewing unit 3, and discharging the cleaning liquid through the first fluid pipeline 1, thereby cleaning the brewing unit 3 and the first part of the first fluid pipeline 1.

A fifth embodiment is shown as follows.

Different from the fourth embodiment, in a coffee pipeline system as shown in FIG. 5 and FIG. 6, an outlet end of the second fluid pipeline 2 faces upward. In an emptying process, a second part of the first fluid pipeline 1 is communicated with external atmospheric pressure through a second fluid pipeline 2, and residual coffee or cleaning liquid is discharged through a beverage outlet 10. In a cleaning process, the first fluid pipeline 1 is unobstructed, and a cleaning liquid is discharged through a beverage outlet 10.

It should be noted that, in both the second embodiment and the fourth embodiment, the control component is configured to make the pipeline be communicated with the atmosphere, and the position of the outlet end of the second fluid pipeline 2 is lower than the position of the beverage outlet 10, the residual coffee falls into the beverage container 6 or the collection container 7 under gravity, the first fluid pipeline 1 is horizontally arranged, and the second fluid pipeline 2 is vertically arranged in FIG. 2 and FIG. 4, which are both in an ideal state, and in an actual device, an angle of the first fluid pipeline 1 and the second fluid pipeline 2 may be adjusted to facilitate the discharge of residual coffee or cleaning liquid.

As shown in FIG. 5, in the first, second, and fourth embodiment, the collection container 7 may also be directly connected to the outlet end of the second fluid pipeline 2, that is, the beverage outlet.

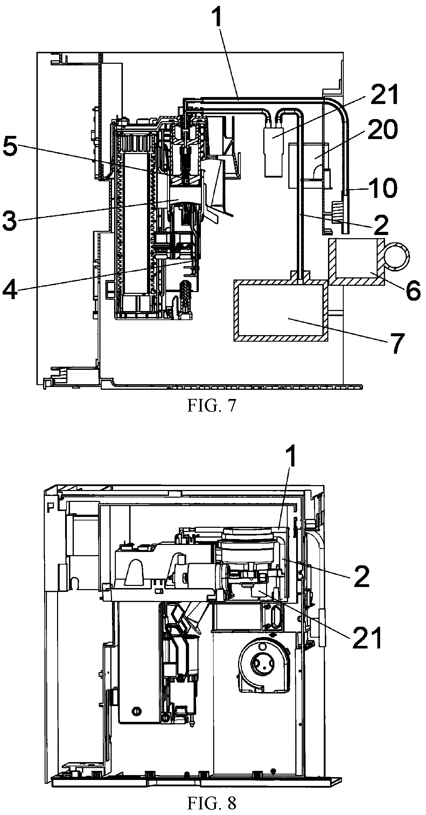

A coffee machine as shown in FIG. 8 comprises a pipeline system according to any one of the above-mentioned embodiments.

The pipeline system of the beverage brewing device provided by the present invention is described in detail above. Specific examples are used herein to describe the structure and working principle of the present invention, and the description of the above embodiments is only used to help understand the method and core idea of the present invention. It should be noted that, for a person of ordinary skill in the art, several improvements and modifications may be made to the present invention without departing from the principle of the present invention, as long as these improvements and modifications also fall within the scope of the claims of the present invention.

## Claims

1. A pipeline system of a beverage brewing device, comprising: a host control unit, a brewing unit (3), a first fluid pipeline (1), wherein one end of the first fluid pipeline (1) is connected to the brewing unit (3) and configured to output a beverage from the brewing unit (3) to a beverage outlet (10), the pipeline system of the beverage brewing device further comprising: a control component and a second fluid pipeline (2), wherein one end of the second fluid pipeline (2) is connected to the first fluid pipeline (1) at a connection point which is located between the brewing unit (3) and the beverage outlet (10); and the control component is mounted on a pipeline and configured to control on-off of the first fluid pipeline (1) and the second fluid pipeline (2), wherein the control component is a drainage pump (21), and the drainage pump (21) is controlled by the host control unit; an input end and an output end of the drainage pump (21) are both connected to the second fluid pipeline (2), and the output end of the drainage pump (21) is connected to a part of the second fluid pipeline (2) with an outlet;
when the drainage pump (21) is switched on, a suction force is generated on a fluid in the first fluid pipeline (1) and the brewing unit (3) to control the liquid in the first fluid pipeline (1) and the second fluid pipeline (2) to flow towards a collection container (7);
when a beverage needs to be output, the drainage pump (21) is switched off, so that a first pathway formed from the brewing unit (3) to the beverage outlet (10) is unobstructed;
when a residual beverage in the second part of the first fluid pipeline (1) needs to be drained, the drainage pump (21) is switched on, so that a third pathway formed from the beverage outlet (10) to the collection container (7) is unobstructed; and
when a cleaning liquid in the brewing unit (3) needs to be discharged, the drainage pump (21) is switched on, so that a second pathway formed from the brewing unit (3) to the collection container (7) is unobstructed;
wherein the control component is configured to empty a second part of the first fluid pipeline (1) through the second fluid pipeline (2).

2. The pipeline system of the beverage brewing device according to claim 1, wherein when liquid in a first part of the first fluid pipeline (1) or liquid in the brewing unit (3) and in the first part of the first fluid pipeline (1) is to be discharged, the drainage pump (21) makes the second fluid pipeline (2) be on to discharge the liquid.

3. The pipeline system of the beverage brewing device according to claim 1, wherein the brewing unit (3) and a first part of the first fluid pipeline (1) are communicated with external atmospheric pressure, and the drainage pump (21) is controlled to make the first fluid pipeline (1) or the second fluid pipeline (2) unobstructed, thereby making the liquid in the first part of the first fluid pipeline (1) discharge under gravity.

4. A beverage brewing device, **characterized by**, comprising the pipeline system of the beverage brewing device according to any one of claims 1 to 3.

5. A working method for a pipeline system of a beverage brewing device according to any one of claims 1 to 3, comprising following steps:
S1: selecting a working mode of the pipeline system according to an instruction of the beverage brewing device;
S2: starting, by the host control unit, the working mode according to selection;
S3:switching on-off of a first fluid pipeline (1) and a second fluid pipeline (2) by the control component of the pipeline system according to the working mode selected, to empty all or part of a pipeline through the second fluid pipeline (2), wherein the working mode comprises a first mode, a second mode and a third mode, wherein the control component is controlled by the host control unit;
wherein the third mode comprises a step S3c, a step S3a and a step S3b, the step S3a comprises: switching the control component to make a pathway from the beverage outlet (10) to the second fluid pipeline (2) unobstructed to drain the liquid in a second part of the first fluid pipeline (1) with air being introduced, and the liquid in the second part of the first fluid pipeline (1) is drained through the first fluid pipeline (1) or the second fluid pipeline (2); the step S3b comprises: making a first part of the first fluid pipeline (1) be communicated with an external atmospheric pressure, and switching the control component to make one of the first fluid pipeline (1) or the second fluid pipeline (2) unobstructed, so that liquid in the first part of the first fluid pipeline (1) is discharged through the first fluid pipeline (1) or the second fluid pipeline (2), and the step S3c comprises: switching the control component to make one of the first fluid pipeline (1) and the second fluid pipeline (2) unobstructed, inputting a cleaning liquid into the brewing unit (3), and discharging the cleaning liquid selectively through the first fluid pipeline (1) or the second fluid pipeline (2), to clean the brewing unit (3) and all or part of the first fluid pipeline (1);
S4: performing, by the control component, automatic reset after a set time or next start of the beverage brewing device.

6. The working method for the pipeline system of the beverage brewing device according to claim 5, wherein the first mode comprises following steps:
S3a: switching the control component to make a pathway from the beverage outlet (10) to the second fluid pipeline (2) unobstructed to drain the liquid in the second part of the first fluid pipeline (1).

7. The working method for the pipeline system of the beverage brewing device according to claim 5, wherein the second mode comprises a step S3a and a step S3b:
S3a: switching the control component to make a pathway from the beverage outlet (10) to the second fluid pipeline (2) unobstructed to drain the liquid in the second part of the first fluid pipeline (1);
S3b: making a first part of the first fluid pipeline (1) be communicated with the external atmospheric pressure, switching the control component to make one of the first fluid pipeline (1) or the second fluid pipeline (2) unobstructed, so that liquid in the first part of the first fluid pipeline (1) is discharged through the first fluid pipeline (1) or the second fluid pipeline (2).

8. The working method for the pipeline system of the beverage brewing device according to claim 5, wherein, the step S3c is performed before the step S3a.

9. The working method for the pipeline system of the beverage brewing device according to claim 5 to 7, wherein the first mode is selected when only the second part of the first pipeline (1) needs to be emptied, the second mode is selected when the residual liquid in all of the first fluid pipeline (1) needs to be drained, the third mode is selected when the beverage brewing device pipeline needs to be cleaned and a cleaning liquid in the pipeline needs to be discharged.

## Patentansprüche

1. Ein Rohrleitungssystem einer Getränkebrühvorrichtung, das Folgendes beinhaltet: eine Host-Steuerungseinheit, eine Brüheinheit (3), eine erste Fluid-Rohrleitung (1), wobei ein Ende der ersten Fluid-Rohrleitung (1) mit der Brüheinheit (3) verbunden ist und dazu konfiguriert ist, ein Getränk von der Brüheinheit (3) an einen Getränkeauslass (10) auszugeben, wobei das Rohrleitungssystem der Getränkebrühvorrichtung ferner Folgendes beinhaltet:
eine Steuerungskomponente und eine zweite Fluid-Rohrleitung (2), wobei ein Ende der zweiten Fluid-Rohrleitung (2) mit der ersten Fluid-Rohrleitung (1) an einem Verbindungspunkt verbunden ist, der zwischen der Brüheinheit (3) und dem Getränkeauslass (10) liegt; und wobei die Steuerungskomponente auf einer Rohrleitung montiert ist und dazu konfiguriert ist, Ein-Aus der ersten Fluid-Rohrleitung (1) und der zweiten Fluid-Rohrleitung (2) zu steuern, wobei die Steuerungskomponente eine Entleerungspumpe (21) ist und die Entleerungspumpe (21) durch die Host-Steuerungseinheit gesteuert wird; wobei sowohl ein Eingangsende als auch ein Ausgangsende der Entleerungspumpe (21) mit der zweiten Fluid-Rohrleitung (2) verbunden sind und wobei das Ausgangsende der Entleerungspumpe (21) mit einem Teil der zweiten Fluid-Rohrleitung (2) mittels eines Auslasses verbunden ist;
wobei, wenn die Entleerungspumpe (21) eingeschaltet ist, eine Saugkraft auf einem Fluid in der ersten Fluid-Rohrleitung (1) und der Brüheinheit (3) erzeugt wird, um die Flüssigkeit in der ersten Fluid-Rohrleitung (1) und der zweiten Fluid-Rohrleitung (2) zu steuern, damit sie zu einem Auffangbehälter (7) fließt;
wobei, wenn ein Getränk ausgegeben werden muss, die Entleerungspumpe (21) ausgeschaltet ist, sodass ein von der Brüheinheit (3) zu dem Getränkeauslass (10) gebildeter erster Weg unversperrt ist;
wobei, wenn Restgetränk in dem zweiten Teil der ersten Fluid-Rohrleitung (1) entleert werden muss, die Entleerungspumpe (21) eingeschaltet wird, sodass ein von dem Prüfauslass (10) zu dem Auffangbehälter (7) gebildeter dritter Weg unversperrt ist; und
wobei, wenn Reinigungsflüssigkeit in der Brüheinheit (3) abgeleitet werden muss, die Entleerungspumpe (21) eingeschaltet wird, sodass ein von der Brüheinheit (3) zu dem Auffangbehälter (7) gebildeter zweiter Weg unversperrt ist;
wobei die Steuerungskomponente dazu konfiguriert ist, einen zweiten Teil der ersten Fluid-Rohrleitung (1) über die zweite Fluid-Rohrleitung (2) zu leeren.

2. Rohrleitungssystem der Getränkebrühvorrichtung gemäß Anspruch 1, wobei, wenn Flüssigkeit in einem ersten Teil der ersten Fluid-Rohrleitung (1) oder Flüssigkeit in der Brüheinheit (3) und in dem ersten Teil der ersten Fluid-Rohrleitung (1) abgeleitet werden muss, die Entleerungspumpe (21) die zweite Fluid-Rohrleitung (2) eingeschaltet macht, um die Flüssigkeit abzuleiten.

3. Rohrleitungssystem der Getränkebrühvorrichtung gemäß Anspruch 1, wobei die Brüheinheit (3) und ein erster Teil der ersten Fluid-Rohrleitung (1) mit einem externen atmosphärischen Druck kommunizieren und die Entleerungspumpe (21) gesteuert wird, um die erste Fluid-Rohrleitung (1) oder die zweite Fluid-Rohrleitung (2) unversperrt zu machen, wodurch die Flüssigkeit in dem ersten Teil der ersten Fluid-Rohrleitung (1) unter Schwerkraft abgeleitet wird.

4. Eine Getränkebrühvorrichtung, **dadurch gekennzeichnet, dass** sie das Rohrleitungssystem der Getränkebrühvorrichtung gemäß einem der Ansprüche 1 bis 3 beinhaltet.

5. Ein Arbeitsverfahren für ein Rohrleitungssystem einer Getränkebrühvorrichtung gemäß einem der Ansprüche 1 bis 3, das die folgenden Schritte beinhaltet:
S1: Selektieren eines Arbeitsmodus des Rohrleitungssystems gemäß einer Anweisung der Getränkebrühvorrichtung;
S2: Starten, durch die Host-Steuerungseinheit, des Arbeitsmodus gemäß Selektion;
S3: Ein-Aus-Schalten einer ersten Fluid-Rohrleitung (1) und einer zweiten Fluid-Rohrleitung (2) durch die Steuerungskomponente des Rohrleitungssystems gemäß dem selektierten Arbeitsmodus, um eine Rohrleitung ganz oder teilweise durch die zweite Fluid-Rohrleitung (2) zu leeren, wobei der Arbeitsmodus einen ersten Modus, einen zweiten Modus und einen dritten Modus beinhaltet, wobei die Steuerungskomponente durch die Host-Steuerungseinheit gesteuert wird;
wobei der dritte Modus einen Schritt S3c, einen Schritt S3a und einen Schritt S3b beinhaltet, wobei der Schritt S3a Folgendes beinhaltet: Schalten der Steuerungskomponente, um einen Weg von dem Getränkeauslass (10) zu der zweiten Fluid-Rohrleitung (2) unversperrt zu machen, um die Flüssigkeit in einem zweiten Teil der ersten Fluid-Rohrleitung (1) zu entleeren, wobei Luft eingeführt wird und die Flüssigkeit in dem zweiten Teil der ersten Fluid-Rohrleitung (1) durch die erste Fluid-Rohrleitung (1) oder die zweite Fluid-Rohrleitung (2) entleert wird; wobei der Schritt S3b Folgendes beinhaltet: einen ersten Teil der ersten Fluid-Rohrleitung (1) mit einem externen atmosphärischen Druck in Kommunikation bringen und Schalten der Steuerungskomponente, um eine von der ersten Fluid-Rohrleitung (1) oder der zweiten Fluid-Rohrleitung (2) unversperrt zu machen, sodass Flüssigkeit in dem ersten Teil der ersten Fluid-Rohrleitung (1) durch die erste Fluid-Rohrleitung (1) oder die zweite Fluid-Rohrleitung (2) abgeleitet wird, und wobei der Schritt S3c Folgendes beinhaltet:
Schalten der Steuerungskomponente, um eine von der ersten Fluid-Rohrleitung (1) oder der zweiten Fluid-Rohrleitung (2) unversperrt zu machen, Eingeben einer Reinigungsflüssigkeit in die Brüheinheit (3) und selektives Ableiten der Reinigungsflüssigkeit durch die erste Fluid-Rohrleitung (1) oder die zweite Fluid-Rohrleitung (2), um die Brüheinheit (3) und die erste Fluid-Rohrleitung (1) ganz oder teilweise zu reinigen;
S4: Durchführen, durch die Steuerungskomponente, einer automatischen Rückstellung nach einer eingestellten Zeit oder eines nächsten Starts der Getränkebrühvorrichtung.

6. Arbeitsverfahren für das Rohrleitungssystem der Getränkebrühvorrichtung gemäß Anspruch 5, wobei der erste Modus folgende Schritte beinhaltet:
S3a: Schalten der Steuerungskomponente, um einen Weg von dem Getränkeauslass (10) zu der zweiten Fluid-Rohrleitung (2) unversperrt zu machen, um die Flüssigkeit in dem zweiten Teil der ersten Fluid-Rohrleitung (1) zu entleeren.

7. Arbeitsverfahren für das Rohrleitungssystem der Getränkebrühvorrichtung gemäß Anspruch 5, wobei der zweite Modus einen Schritt S3a und einen Schritt S3b beinhaltet:
S3a: Schalten der Steuerungskomponente, um einen Weg von dem Getränkeauslass (10) zu der zweiten Fluid-Rohrleitung (2) unversperrt zu machen, um die Flüssigkeit in dem zweiten Teil der ersten Fluid-Rohrleitung (1) zu entleeren;
S3b: einen ersten Teil der ersten Fluid-Rohrleitung (1) mit dem externen atmosphärischen Druck in Kommunikation bringen, Schalten der Steuerungskomponente, um eine von der ersten Fluid-Rohrleitung (1) oder der zweiten Fluid-Rohrleitung (2) unversperrt zu machen, sodass Flüssigkeit in dem ersten Teil der ersten Fluid-Rohrleitung (1) durch die erste Fluid-Rohrleitung (1) oder die zweite Fluid-Rohrleitung (2) abgeleitet wird.

8. Arbeitsverfahren für das Rohrleitungssystem der Getränkebrühvorrichtung gemäß Anspruch 5, wobei der Schritt S3c vor dem Schritt S3a durchgeführt wird.

9. Arbeitsverfahren für das Rohrleitungssystem der Getränkebrühvorrichtung gemäß Anspruch 5 bis 7, wobei der erste Modus selektiert wird, wenn nur der zweite Teil der ersten Rohrleitung (1) geleert werden muss, der zweite Modus selektiert wird, wenn die Restflüssigkeit in der ganzen der ersten Fluid-Rohrleitung (1) entleert werden muss, der dritte Modus selektiert wird, wenn die Getränkebrühvorrichtung-Rohrleitung gereinigt werden muss und eine Reinigungsflüssigkeit in der Rohrleitung abgeleitet werden muss.

## Revendications

1. Un système de conduites d'un dispositif d'infusion de boisson, comprenant : une unité de commande hôte, une unité d'infusion (3), une première conduite de fluide (1), où une extrémité de la première conduite de fluide (1) est raccordée à l'unité d'infusion (3) et configurée pour fournir une boisson provenant de l'unité d'infusion (3) à une sortie de boisson (10), le système de conduites du dispositif d'infusion de boisson comprenant en outre :
un composant de commande et une deuxième conduite de fluide (2), où une extrémité de la deuxième conduite de fluide (2) est raccordée à la première conduite de fluide (1) en un point de raccordement qui est situé entre l'unité d'infusion (3) et la sortie de boisson (10) ; et le composant de commande est monté sur une conduite et configuré pour commander le branchement/débranchement de la première conduite de fluide (1) et de la deuxième conduite de fluide (2), où le composant de commande est une pompe de drainage (21), et la pompe de drainage (21) est commandée par l'unité de commande hôte ; une extrémité d'entrée et une extrémité de sortie de la pompe de drainage (21) sont toutes deux raccordées à la deuxième conduite de fluide (2), et
l'extrémité de sortie de la pompe de drainage (21) est raccordée à une partie de la deuxième conduite de fluide (2) dotée d'une sortie ;
lorsque la pompe de drainage (21) est mise en marche, une force d'aspiration est générée sur un fluide dans la première conduite de fluide (1) et l'unité d'infusion (3) pour commander le liquide dans la première conduite de fluide (1) et la deuxième conduite de fluide (2) de façon qu'il s'écoule vers un récipient de collecte (7) ;
lorsqu'une boisson doit être fournie, la pompe de drainage (21) est arrêtée, de sorte qu'une première voie formée à partir de l'unité d'infusion (3) jusqu'à la sortie de boisson (10) n'est pas obstruée ;
lorsqu'une boisson restante dans la deuxième partie de la première conduite de fluide (1) doit être drainée, la pompe de drainage (21) est mise en marche, de sorte qu'une troisième voie formée à partir de la sortie de boisson (10) jusqu'au récipient de collecte (7) n'est pas obstruée ; et
lorsqu'un liquide de nettoyage dans l'unité d'infusion (3) doit être évacué, la pompe de drainage (21) est mise en marche, de sorte qu'une deuxième voie formée à partir de l'unité d'infusion (3) jusqu'au récipient de collecte (7) n'est pas obstruée ;
où le composant de commande est configuré pour vider une deuxième partie de la première conduite de fluide (1) à travers la deuxième conduite de fluide (2).

2. Le système de conduites du dispositif d'infusion de boisson selon la revendication 1, où, lorsque du liquide dans une première partie de la première conduite de fluide (1) ou du liquide dans l'unité d'infusion (3) et dans la première partie de la première conduite de fluide (1) doit être évacué, la pompe de drainage (21) amène la deuxième conduite de fluide (2) à être branchée pour évacuer le liquide.

3. Le système de conduites du dispositif d'infusion de boisson selon la revendication 1, où l'unité d'infusion (3) et une première partie de la première conduite de fluide (1) sont mises en communication avec la pression atmosphérique externe, et la pompe de drainage (21) est commandée pour amener la première conduite de fluide (1) ou la deuxième conduite de fluide (2) à ne pas être obstruée, ce qui permet d'amener le liquide dans la première partie de la première conduite de fluide (1) à s'évacuer sous l'effet de la gravité.

4. Un dispositif d'infusion de boisson, **caractérisé par le fait qu'**il comprend le système de conduites du dispositif d'infusion de boisson selon l'une quelconque des revendications 1 à 3.

5. Un procédé de fonctionnement pour un système de conduites d'un dispositif d'infusion de boisson selon l'une quelconque des revendications 1 à 3, comprenant les étapes suivantes :
S1 : la sélection d'un mode de fonctionnement du système de conduites selon une instruction du dispositif d'infusion de boisson ;
S2 : le démarrage, par l'unité de commande hôte, du mode de fonctionnement selon la sélection ;
S3 : le branchement/débranchement d'une première conduite de fluide (1) et d'une deuxième conduite de fluide (2) par le composant de commande du système de conduites selon le mode de fonctionnement sélectionné, pour vider la totalité ou une partie d'une conduite à travers la deuxième conduite de fluide (2), où le mode de fonctionnement comprend un premier mode, un deuxième mode et un troisième mode, où le composant de commande est commandé par l'unité de commande hôte ;
où le troisième mode comprend une étape S3c, une étape S3a et une étape S3b, l'étape S3a comprend : la commutation du composant de commande pour amener une voie à partir de la sortie de boisson (10) jusqu'à la deuxième conduite de fluide (2) à ne pas être obstruée afin de drainer le liquide dans une deuxième partie de la première conduite de fluide (1) grâce à de l'air qui est introduit, et le liquide dans la deuxième partie de la première conduite de fluide (1) est drainé à travers la première conduite de fluide (1) ou la deuxième conduite de fluide (2) ; l'étape S3b comprend : la mise en communication d'une première partie de la première conduite de fluide (1) avec une pression atmosphérique externe, et la commutation du composant de commande pour amener une conduite parmi la première conduite de fluide (1) et la deuxième conduite de fluide (2) à ne pas être obstruée, de sorte que du liquide dans la première partie de la première conduite de fluide (1) est évacué à travers la première conduite de fluide (1) ou la deuxième conduite de fluide (2), et l'étape S3c comprend : la commutation du composant de commande pour amener une conduite parmi la première conduite de fluide (1) et la deuxième conduite de fluide (2) à ne pas être obstruée, l'alimentation de l'unité d'infusion (3) en un liquide de nettoyage, et l'évacuation du liquide de nettoyage sélectivement à travers la première conduite de fluide (1) ou la deuxième conduite de fluide (2), afin de nettoyer l'unité d'infusion (3) et la totalité ou une partie de la première conduite de fluide (1);
S4 : la réalisation, par le composant de commande, d'une réinitialisation automatique après une durée définie ou le démarrage suivant du dispositif d'infusion de boisson.

6. Le procédé de fonctionnement pour le système de conduites du dispositif d'infusion de boisson selon la revendication 5, où le premier mode comprend les étapes suivantes : S3a : la commutation du composant de commande pour amener une voie à partir de la sortie de boisson (10) jusqu'à la deuxième conduite de fluide (2) à ne pas être obstruée afin de drainer le liquide dans la deuxième partie de la première conduite de fluide (1).

7. Le procédé de fonctionnement pour le système de conduites du dispositif d'infusion de boisson selon la revendication 5, où le deuxième mode comprend une étape S3a et une étape S3b :
S3a : la commutation du composant de commande pour amener une voie allant de la sortie de boisson (10) à la deuxième conduite de fluide (2) à ne pas être obstruée afin de drainer le liquide dans la deuxième partie de la première conduite de fluide (1) ;
S3b : la mise en communication d'une première partie de la première conduite de fluide (1) avec la pression atmosphérique externe, la commutation du composant de commande pour amener une conduite parmi la première conduite de fluide (1) et la deuxième conduite de fluide (2) à ne pas être obstruée, de sorte que du liquide dans la première partie de la première conduite de fluide (1) est évacué à travers la première conduite de fluide (1) ou la deuxième conduite de fluide (2).

8. Le procédé de fonctionnement pour le système de conduites du dispositif d'infusion de boisson selon la revendication 5, où l'étape S3c est réalisée avant l'étape S3a.

9. Le procédé de fonctionnement pour le système de conduites du dispositif d'infusion de boisson selon les revendications 5 à 7, où le premier mode est sélectionné lorsque seulement la deuxième partie de la première conduite (1) doit être vidée, le deuxième mode est sélectionné lorsque le liquide restant dans la totalité de la première conduite de fluide (1) doit être drainé, le troisième mode est sélectionné lorsque la conduite de dispositif d'infusion de boisson doit être nettoyée et un liquide de nettoyage dans la conduite doit être évacué.
